# EUROPEAN PATENT SPECIFICATION

(11) **EP 1 036 121 B1**
(45) Date of publication and mention of the grant of the patent: **27.03.2002**
(21) Application number: 97952445.1
(22) Date of filing: 10.12.1997
(51) Int. Cl.: C09J 7/02, C08J 5/18

(54) **ORIENTED POLYPROPYLENE-BASED BACKING FILMS FOR ADHESIVE TAPE**
VERSTÄRKUNGSSCHICHT FÜR KLEBEBAND, AUF BASIS VON ORIENTIERTEM POLYPROPYLEN
FILMS DE SUPPORT A BASE DE POLYPROPYLENE ORIENTE POUR RUBAN ADHESIF

(43) Date of publication of application: 20.09.2000
(73) Proprietor: MINNESOTA MINING AND MANUFACTURING COMPANY, St. Paul, Minnesota 55133-3427 (US)
(72) Inventor: HAGER, Patrick, J., Woodbury, MN 55129 (US); PEARSON, Scott, D., Woodbury, MN 55125 (US)
(74) Representative: VOSSIUS & PARTNER
(86) International application number: US9723072
(87) International publication number: WO9929794

(56) References cited:
- US-A- 3 241 662
- US-A- 4 451 533
- US-A- 4 595 738

## Description

This invention relates to biaxially oriented polypropylene films and in particular biaxially oriented polypropylene adhesive coated tapes.

Commercially available pressure sensitive adhesive tapes are usually provided in a roll form on a tape dispenser (see e.g. U.S. Patent Nos. 4,451,533 and 4,908,278). Tape dispensers typically have either a metal or plastic serrated cutting blade. "Severability" of adhesive tape is defined as the ability to cut or sever a length of tape by pulling the tape over the teeth on the serrated cutting edge of a tape dispenser with a desired amount of energy or work. Severability is also referred to as "dispensability." It is desired that the severed tape does not chip, sliver, fracture or break in an unpredictable manner (see U.S. Patent Nos. 4,451,533 and 4,908,278). Such severability is desirable to produce a cleanly serrated cut edge on the severed tape strip. Severability is governed primarily by the properties of the backing of the adhesive tape. The quality of the severed edge is believed to be controlled primarily by the force required to initiate severing and the subsequent crack propagation behavior in semicrystalline films. See G.L.A. Sims, J. Materials Science, *10*, 647-657 (1975); K. Friedrich, Progress in Colloid & Polymer Science, *64*, 103-112 (1978); J. Snyder et al., Polymer Engineering & Science, *34(4)*, 269-278 (1994). Cleanly serrated edges are preferred for aesthetic reasons in applications such as gift wrapping, mending, and the like. The greater the energy required to sever the film, the more extensive the resulting damage to the film and the less aesthetically appealing the resulting severed edge. This is believed to be duc in part to the elastic strain energy built up during the deformation being suddenly and catastrophically released when the film's inherent strength limit is surpassed. The subsequent failure propagates uncontrollably in a tearing or ripping fashion so that the cut edge does not follow closely the contour of the teeth of the dispenser. The propagation also is directed along the underlying fibril orientation distribution rather than closely following the contour of the dispenser teeth.

Severance of cast glassy amorphous tape backing films like cellophane and cellulose acetate is believed to occur by brittle failure, that is, the film breaks under load before it can deform. Such films have the drawbacks of high cost, low strength, moisture instability, unacceptable haze. and a tendency to discolor. In addition, they are prone to "sliver" or split longitudinally when attempting to peel the tape from the roll. This makes the tape difficult for a user to restart with a fresh edge.

By comparison, commercially available biaxially oriented polypropylene films are well known for their toughness, moisture stability, good color, moisture and slivering resistance, and clarity and have long been used as adhesive tape backings (see U.S. Patent Nos. 3,241,662 and 3,324,218). However, adhesive tapes produced from such films tend to stretch significantly before breaking while under load, and this toughness renders such films extremely difficult to sever, particularly on a plastic bladed dispenser. The deformation to break requires extensive work on the part of the user and therefore is undesirable.

Commercially available tape dispensers with plastic cutting blades arc commonly used for hand-held units such as a Catalog No. 104 3M Magic™ tape dispenser, available from Minnesota Mining and Manufacturing Company, St. Paul, Minnesota. However, dispensers with plastic cutting blades are typically not sharp and durable enough to sever oriented polypropylene tapes acceptably. For this reason, commercially available dispensers for biaxially oriented polypropylene tape usually are equipped with sharp metal blades. Such metal blade dispensers are more costly and difficult to manufacture than dispensers with plastic blades.

Examples in the prior art of attempts to improve the severability of polypropylene based tapes disclose methods to stiffen and/or embrittle polypropylene films which fall predominantly into two general methods. The first method relies on modifying the film with brittle or glassy resins or other modifiers to impart a substantially glassy behavior in an attempt to facilitate breaking. The second method typically involves a final stretching step in the film's longitudinal direction which imparts high stiffness and very low tensile elongation to break.

Chemical modification of films is usually accomplished by incorporating brittle or glassy materials such as natural or synthetic hydrocarbon resins characterized by softening points between about 100°and 180°C and low molecular weights in the range of about 10² - 10³ g/mol. These materials are typically admixed with the base isotactic polypropylene in a physical blend, or are present in one or more layers of a multilayer construction in enriched form.

Films can be processed to increase the film stiffness and decrease the film's tensile elongation to break. In some cases, a high degree of transverse (that is, in the cross-film web direction) stretching is believed desirable (see U.S. Pat. No. 4,513,028), while in others a high degree of longitudinal stretching is believed desirable (see U.S. Pat. No. 4,414,261).

Both the chemical and mechanical approaches often result in films which are objectionably stiff or brittle, are difficult to manufacture and convert into tapes due to frequent web breakage, exhibit undesirably high force and energy to dispense, do not have a cleanly serrated edge when severed on a plastic bladed dispenser, and cause more rapid frictional wearing of tape dispenser teeth, especially plastic bladed dispensers.

U.S. Pat. No. 3,241,662 describes a biaxially oriented polypropylene tape backing based pressure sensitive adhesive tape. The film is processed so as to give a ratio of edge tear resistance to cross-direction tear resistance of about 10:1. In addition, the film should not stretch to more than about 1,4 times its original length when cut as a tape, and can exhibit longitudinal direction elongation and modulus values either greater or less than the cross direction. There are no teachings to preferred process or structural information.

U.S. Pat. No. 3,887,745 discloses a multilayer construction in which a base polyolefin sheet is first monoaxially oriented in its longitudinal direction then laminated with a second olefin layer, and the entire construction oriented in its transverse direction to produce a finger-tearable adhesive tape. The second olefinic layer has a melting point 0.5-10°C greater than the base sheet melting point.

U.S. Pat. No. 4,393,115 discloses a multilayer laminate film comprising a first biaxially oriented core layer of polypropylene and second uniaxially oriented polypropylene layer oriented only in the transverse direction, laminated with a surface layer composed of a polypropylene/polyethylene block copolymer. The construction is claimed to improve finger tearability and tape dispenser severability, the latter attributed to a large degree of transverse stretch (i.e., TD = 9X).

U.S. Pat. No. 4,414,261 discloses a multilayer biaxially oriented adhesive tape backing comprising a polypropylene base sheet blended with 25-35% hydrocarbon resin laminated with polypropylene surface layers. The hydrocarbon resin is incorporated to increase the film's brittleness and allow for cutting.

U.S. Pat. No. 4,447,485 discloses multilayer adhesive tape backing film comprising a base layer of polypropylene containing 5-50% by weight polymethylepentene which serves to embrittle the film and improve finger tearability. The film is stretched sequentially or stepwise to a balanced final draw ratio wherein longitudinal and transverse stretch ratios are equivalent.

U.S. Pat. No. 4,451,533 discloses a severable polypropylene adhesive tape backing film which has been biaxially oriented in 3 stages to give a film with very high longitudinal stiffness and improved severability. In a preferred embodiment the film is first stretched longitudinally by about 3-7 times its original length, followed by a second transversal stretching step of 3-10 times, and finally an additional longitudinal stretching step of 1.5-5 times. The film backings are claimed to be sufficiently brittle so that they will break in the longitudinal direction before a strain of 30% is reached, preferably breaking before stretching to a strain of to 25%, and most preferably before they reach 15% strain.

U.S. Pat. No. 4,513,028 discloses a biaxially oriented multilayer adhesive tape backing film comprising a base polypropylene sheet containing 5-50% by weight polymethylpentene which serves to embrittle the film and at least one roughened polypropylene surface layer containing fine inorganic particles to confer writability.

U.S. Pat. No. 4,716,068 discloses a biaxially oriented three layer adhesive tape backing film sequentially stretched as in U.S. Pat. No. 4,451,533, comprising a base sheet of isotactic polypropylene and two base layers, one of which contains 5-30% of a hydrocarbon resin which serves to embrittle the film and the other containing a diorganopolysiloxane.

US 4,908,278 discloses a cast, multilayer severable thermoplastic film useful as an adhesive tape backing comprising alternating layers of polypropylene, polymethyl methacrylate, and polyethylenevinyl acetate tie layers.

U.S. Pat. Nos. 5,292,563 and 5,451,455 disclose biaxially oriented multilayer polypropylene twist wrapping films comprising a base sheet of isotactic polypropylene combined with 5-30% low molecular weight hydrocarbon resin which serves to embrittle the film. The film is stretched sequentially or stepwise to a balanced final draw ratio wherein longitudinal and transverse stretch ratios are equivalent.

European Patent 079520 discloses a biaxially oriented polypropylene film with high longitudinal modulus, comprising a polypropylene sheet containing 5-30% of a low molecular weight hydrocarbon resin which serves to embrittle the film and improve its stiffness. The sheet is stretched in at least 3 steps with a longitudinal final stretching step.

U.S. Pat. No. 4,343,852 discloses a simultaneous biaxially oriented multilayer film comprising a base layer of polypropylene and at least one surface layer containing propylene copolymers. The entire construction can be oriented together, or the surface and base layers oriented differently so as to give good heat shrinkability.

U.S. Pat. No. 4,595,738 discloses a simultaneously biaxially oriented polypropylene adhesive tape backing having mainly balanced mechanical properties and a surface stretch ratio of at least 45:1. The claimed films exhibit good dynamic resistance and specific puncture resistance, mainly balanced mechanical properties, and applications to audio and video tapes or adhesive coated packaging tapes where sudden shock resistance and specific puncture resistance are desired.

U.S. Pat. No. 4,698,261 describes an opaque biaxially oriented multilayer film comprising at least three inner support layers, at least one of which contains 1-30% hydrocarbon resin to impart improved stiffness and to embrittle the film and at least one of which contains fine inorganic particles to impart opacity.

WIPO International Patent Application Publication WO 96/02386 discloses a uniaxially shrinkable multilayer biaxially oriented polypropylene film comprising a modified polypropylene core processed similarly to U.S. Pat. No. 4,451,533 with a final longitudinal stretching step of 10-40%. The initial biaxial stretching prior to tensilization in the third longitudinal stretching step may be carried out sequentially or simultaneously. Modifiers having relatively low molecular weight, and intended to reduce the core layer crystallinity are incorporated at low levels to provide easier stretching in the third longitudinal stretching step.

United States Patent Nos. 5,051,225 and 5,072,493 disclose apparatus and method for drawing film in a tenter frame, in which synchronous and hysteresis motors are used to propel the tenter clips under total control throughout the opposed loops of the tenter frame. Such an apparatus and method permits fine tuning the simultaneous biaxial draw ratio during operation by controlling the machine direction draw ratio. The transverse direction drawing can be adjusted by intermittently driving adjusting screws to move the carriage loops toward and away from each other. These patents state that films can be drawn at least 3X in both directions at strain rates of from 10,000%/minute to as high as 60,000%/minute, preferred films can be drawn at least 5X, more preferred at least 7X, and most preferred at least 9X in both directions.

Biaxially oriented polypropylene films are typically produced by either a flat film tenter stretching process or by a blown film process. In blown film stretching, the film orientation is variable because of thermal relaxation and the typically resulting variability of film thickness is undesirable for tape backings. Typical blown or tubular-made films are undesirable for use as an adhesive tape backing film because of reduced film dimensional stability and excessive caliper variability compared to flat or tenter stretched films. In contrast, the tenter process provides improved stability because the film is restrained edgewise by clips during heat setting (annealing) or cooling, which eliminates crossweb shrinkage and consequent dimensional and fibril orientation changes. Blown or tubular films are not so restrained, and undergo crossweb shrinkage which changes film properties because melt orientation is less effective and film orientation is lower. In addition, tenter frame processes enjoy a cost advantage over blown/tubular processes for film thickness greater than 0.002 cm. Encyclopedia of Polymer Science, v. 7, pp. 99-101, John Wiley & Sons, New York (1987).

Tubular films also suffer significantly greater caliper variability compared to tenter stretched films due to the inherent die design. Unlike flat coat hanger dies used in tenter stretching processes, no simple final film thickness adjustments are possible by lip flexing in tubular dies. As a result, the order of magnitude of thickness accuracy in tubular dies is about ±10% as compared to about ±5% in flat film dies. This greater film thickness variability is compensated for by die rotation, which permits thickness variations to be distributed across the entire width of the finished film product *Principles of Polymer Processing,* Z. Tadmor & C.G. Gogos, Chapt. 13. pp. 551-3, John Wiley & Sons, New York (1979), *Polymer Extrusion,* 2nd. ed., C. Rauwendaal, Chapt. 9, pp. 450-1. Hanser Publishers, New York (1990). Although die rotation can distribute the caliper variations across the web, improving the final roll appearance, thickness variations remain and typically are undesirable for adhesive tape backing applications.

Uniform thickness is important in adhesive tape manufacturing because it is an indication of the uniformity of the film properties and because non-uniform thickness leads to gapping or telescoping of tape rolls. For these reasons, films having a non-uniform thickness typically resulting from blown or tubular film processes typically are not suitable as adhesive tape backings where uniform thickness is important.

The majority of commercially available biaxially oriented polypropylene films are produced by the flat film or tenter stretching process. Typical tenter processes serve to biaxially stretch films either predominately simultaneously or predominately sequentially. Currently, simultaneously tenter stretched films comprise a minor part of the film backing market because, although such processes can continuously stretch films in both longitudinal and transverse directions, they have historically proven costly, slow. and inflexible regarding allowable drawing ratios.

Sequential tenter stretching is currently the most widely used biaxial film processing method. Typically, a thick sheet is extruded and rapidly quenched to form spherules having α-morphology with a monoclinic unit cell. This thick sheet is then reheated to a suitable stretching temperature and stretched in a first lengthwise or longitudinal stretching step, followed by a second transverse stretching step. The semicrystalline polymer chains become transformed by stretching into a morphology composed of bundles of long, highly ordered crystalline segments known as fibrils. It is generally believed that such fibrillar bundles arise from plastic deformation of the initial crystalline structure of cast polypropylene sheets caused by stretching (see: A.J. Peterlin, *Colloid & Polymer Science*, 253(10), 809-23 (1975)). In the sequential process, the crystalline fibrils formed in the first stretching step change their positions in the second stretching step, so that one part of each fibril keeps its initial position (i.e., longitudinal orientation) while another part is turned to an angle of 90° to the first direction. The result is an orthogonal network of fibrils which are said to be "knitted" together. See *"Polypropylene Structure, Blends, and Composites*," J. Karger-Kolsis, ed., V.2, pp144-145, Chapman & Hall, (1995).

In the case of oriented films intended for use as adhesive tape backings, stock rolls are typically slit from a wider input film roll from the film maker. The stock rolls are typically coated with adhesive on one surface and a release coating on the other, slit to narrow widths and wound into roll form.

The morphology, that is, the arrangement and orientation of the fibrils, govern a stretched film's mechanical properties, particularly in regard to loads applied in specific directions. Fibril orientation correlates well with observed mechanical properties (R.J. Samuels, *"Structured Polymer Properties,"* Ch. 5, John Wiley & Sons, N.Y., and A.J. DeVries, *Polymer Engineering & Science,* 23(5), 241 (1983)), whereas machine stretching parameters (MD, TD draw ratios) do not.

There are several widely accepted means by which to measure molecular orientation in oriented polymer systems, among them scattering of light or X-Rays, absorbence measurements, mechanical property analysis, and the like. Quantitative methods include wide angle X-Ray scattering ("WAXS"), optical birefringence, infrared dichroism, and small angle X-Ray scattering ("SAXS"). A preferred method to determine the fibril orientation distribution is the WAXS technique, in which crystalline planes within the fibrillar structures scatter or diffract incident X-Ray beams at an established angle, known as the Bragg angle (see A.W. Wilchinsky, *Journal of Applied Physics*, 31(11), 1969 (1960) and W.B. Lee et al., *Journal of Materials Engineering and Performance*, 5(5), 637 (1996)). In WAXS, a crystalline plane such as the monoclinic (110) plane of isotactic polypropylene containing information about the polypropylene molecular chain (or c-) axis is measured and then related by sample geometry to external co-ordinates.

Thus, there remains a desire to provide a biaxially oriented polypropylene film which when used as a tape backing, provides a readily severable polypropylene adhesive tape backing.

The present provides films comprising biaxially oriented isotactic polypropylene. Such films are well suited for use as adhesive tape backings. The films of this invention can be severed readily using commercial tape dispensers having plastic cutting teeth to produce cleanly serrated cut edges on the tape. Surprisingly, such films still exhibit desired mechanical properties such as high levels of tensile strength and are therefore very useful as tape backings. The inventive tape backing films preferably have a specific, single crystalline morphology orientation with respect to a reference direction "R."

In one preferred embodiment, the present invention provides a film comprising isotactic polypropylene which has been biaxially oriented so as to provide the following desired characteristics and properties:
1. A single azimuthal scan maximum as measured by a WAXS transmission azimuthal scan as described below;
2. The maximum being positioned at an angle within about ±75°, preferably about ±45°, and more preferably about ±25° with respect to reference direction R:
3. The breadth of the single azimuthal scan maximum (the angular full width at half peak maximum) of from about 40° to about 75°;
4. A tensile elongation-to-break in the reference direction of from about 45% to about 90%, more preferably from about 45% to 80%, as determined by the method described below;
5. An energy to sever of less than about 350 N-cm/cm² when severed using a metal serrated dispenser cutting blade according to the test described below;
6. An energy to sever of less than about 700 N-cm/cm² when severed using an injection molded polystyrene dispenser cutting blade according to the test described below;
7. Stretch during severing of less than about 4%, preferably less than about 3% when severed according to the test method described below.

In one preferred embodiment, the above film is an isotactic polypropylene film that has been biaxially oriented so as to have a crystalline morphology satisfying conditions 1-4 above. It is preferred, although not required, that such a film additionally satisfies conditions 5, 6, and/or 7, taken individually or in any combination.

In another preferred embodiment, the above film is an isotactic polypropylene film that has been biaxially oriented so as to satisfy conditions 4 and 5 above. It is preferred, although not required, that such a film additionally satisfies conditions 1, 2, 3, 6, and/or 7, taken individually or in any combination.

In still another preferred embodiment, the above film is an isotactic polypropylene film that has been biaxially oriented so as to satisfy conditions 4 and 6 above. It is preferred, although not required, that such a film additionally satisfies conditions 1, 2, 3, 5, and/or 7, taken individually or in any combination.

In yet a further preferred embodiment, the above film is an isotactic polypropylene film that has been biaxially oriented so as to satisfy conditions 4 and 7 above. It is preferred, although not required, that such a film additionally satisfies conditions 1, 2, 3, 5, and/or 6, taken individually or in any combination.

In yet another aspect, the present invention provides a tape backing comprising any of the just-described films. Such a tape backing may be converted into an adhesive tape, preferably including a pressure sensitive adhesive on one major surface thereof. The adhesive tape may be converted into a roll form and provided on any suitable dispenser.

In still a further aspect, the present invention provides an adhesive tape comprising a backing made from any of the above described films. The adhesive tape is preferably a pressure sensitive adhesive tape. The tape may be provided in roll form on any suitable dispenser.

Certain terms are used in the description and the claims that, while for the most part are well known, may require some explanation. "Area stretch ratio," as used herein, indicates the ratio of the area of a given portion of a stretched film to the area of the same portion prior to stretching. For example, in a biaxially stretched film having an overall stretch ratio of 50:1, a given 1 square inch portion of unstretched film would have an area of 50 square inches after stretch. The "reference direction" as used herein, is the axis lying in the plane of the film against which the crystalline orientation is defined. When determining the tensile properties of a film, the reference direction is the direction in which the film is stretched. When determining the severability of a film, the reference direction is the direction in which the film is pulled over the cutting blade. For backing films converted into adhesive tape in roll form, the reference direction is the direction in which the stock roll is slit into narrow width to be wound into tape rolls. Typically, though not always, the reference direction is the same as the longitudinal direction of the film. "Biaxially oriented," when used herein to describe a film, indicates that the film has been stretched in two different directions in the plane of the film. Typically, but not always, the two directions are perpendicular. Biaxially oriented films may be sequentially stretched, simultaneously stretched, or stretched by some combination of simultaneous and sequential stretching. "Simultaneously biaxially oriented." when used herein to describe a film, indicates that significant portions of the stretching in each of the two directions are performed simultaneously. A "single maximum" when used to describe the WAXS azimuthal scan of the inventive films disclosed herein will be identifiable as a single inflection observed from a WAXS transmission azimuthal scan, exhibiting symmetry within the 360° angular range probed by the X-ray scans due to the diffractometer geometry and the crystal physics of the monoclinic isotactic polypropylene. Such a single maximum is distinguishable from noise in the data and the scattered intensity due to portions of the polymer matrix possessing random orientation, which will typically have a magnitude of less than 1% of the maximum value.

The present invention will be further explained with reference to the following drawings wherein like numbers refer to like parts in the several views, and wherein:
Figure 1 is an isometric view of a length of tape according to the present invention;
Figure 2 is an illustration of WAXS results of a preferred embodiment of film according to the present invention;
Figure 3 is a side view of a roll of adhesive tape according to the present invention;
Figure 4 is a side view of a roll of tape on a dispenser according to the present invention;
Figure 5 is an isometric view of a test fixture used to test the severing characteristics of film according to the present invention;
Figure 6 is an isometric view of the metal dispenser blade useful in the tape dispenser of Figure 4 and the test fixture of Figure 5;
Figure 7 is a side view of the metal dispenser blade of Figure 6;
Figure 8 is a view of a plastic dispenser blade taken in direction 8-8 of Figure 4;
Figure 9 is a cross-sectional view of the dispenser blade of Figure 8 taken along line 9-9;
Figure 10 is a top view of the dispenser blade of Figure 8 taken in direction 10-10;
Figure 11 is a side view of a portion of the apparatus of Figure 5 and the metal dispenser blade of Figure 6;
Figure 12 is a side view of a portion of the apparatus of Figure 5 and the plastic dispenser blade of Figure 9;
Figure 13 is an illustration of a typical severance or dispense testing curve for a polypropylene tape backing of the present invention;
Figure 14 is an enlarged photograph of a prior art polypropylene film severed according to the test method described herein;
Figure 15 is an enlarged photograph of a prior art polypropylene-backed adhesive tape severed according to the test method described herein;
Figure 16 is an enlarged photograph of another prior art polypropylene film severed according to the test method described herein;
Figure 17 is an enlarged photograph of a polypropylene film according to the present invention severed according to the test method described herein; and
Figure 18 is an enlarged photograph of a prior art acetate-backed adhesive tape severed according to the test method described herein.

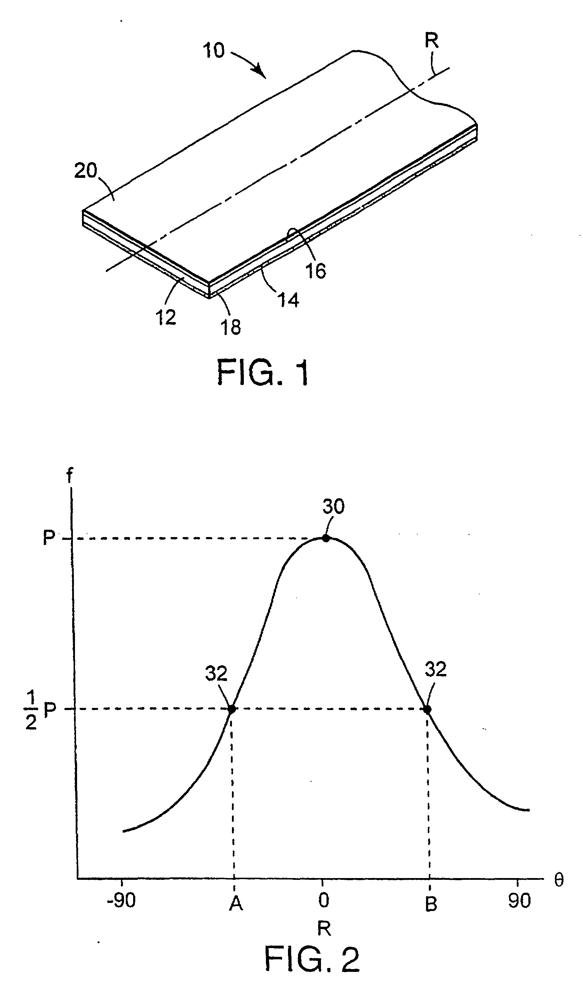

Referring to Figure 1, there is shown a length of tape 10 according to one preferred embodiment of the present invention. Tape 10 comprises a biaxially oriented polypropylene film backing 12 which includes first major surface 14 and second major surface 16. Preferably, backing 12 has a thickness in the range of about 0.002 to about 0.005 centimeters. Backing 12 of tape 10 is coated on first major surface 14 with a layer of adhesive 18. Adhesive 18 may be any suitable adhesive as is known in the art. Backing 12 may have an optional release or low adhesion backside layer 20 coated on the second major surface 16 as is known in the art.

The backing film 12 is preferably produced from isotactic polypropylene having an n-heptane soluble content of less than about 15 % by weight, a density of about 0.86-0.92 grams/cm³ measured according to ASTM D1505-96 ("Density of Plastics by the Density-Gradient Technique"), a melt flow index between about 0.5-15 grams/ten minutes according to ASTM D1238-95 ("Flow Rates of Thermoplastics by Extrusion Plastometer") at a temperature of 230°C and force of 21.6 N, and a melting point as determined using differential scanning calorimetry of greater than 135° C, preferably greater than about 140° C, and most preferably greater than about 150° C. Further, the polypropylenes useful in this invention may be copolymerized with ethylene units or alpha-olefin materials having between 4-8 carbon atoms, said copolymer content being less than 10 % by weight. One suitable resin for backing 12 is an isotactic polypropylene homopolymer resin having a melt flow index of 2.5 g/10 minutes, commercially available under the product designation 3374 from FINA Oil and Chemical Co.. Dallas, TX.

Backing 12 may optionally include additives and other components as is known in the art, preferably in an amount selected so as not to adversely affect the tensile and dispense properties attained by the preferred embodiments described herein. For example, the films of the present invention may contain fillers, plasticizers, colorants, lubricants, processing aids, nucleating agents, ultraviolet-light stabilizing agents, and other property modifiers. Typically such materials are added to a polymer before it is made into an oriented film (e.g., in the polymer melt before extrusion into a film). Organic fillers may include organic dyes and resins, as well as organic fibers such as nylon and polyimide fibers. Inorganic fillers may include pigments, fumed silica, calcium carbonate, talc, diatomaceous earth, titanium dioxide, carbon fibers, carbon black, glass beads, glass bubbles, mineral fibers, clay particles, metal particles and the like. Other additives such as flame retardants, stabilizers, antioxidants, compatibilizers, antimicrobial agents (e.g., zinc oxide), electrical conductors, and thermal conductors (e.g., aluminum oxide, boron nitride, aluminum nitride, and nickel particles) can be blended into the polymer used to form the film.

The resin can be cast into sheet form as is known in the art, to prepare a sheet suitable for stretching to arrive at the preferred morphology of film 12 described herein. One suitable method to cast a sheet is to feed the resin into the feed hopper of a 4.45 cm single screw extruder manufactured by H.P.M. (of Mt. Gilead, OH) having an extruder barrel temperature adjusted to produce a stable homogeneous melt. The polypropylene melt can be extruded through a 17.8 cm single manifold sheet die onto a rotating water cooled steel casting wheel having 50-60° C water circulating through it. The cast sheet can be quenched by passing through a water bath maintained at about 30°C to produce a cast sheet having a thickness of about 0.12-0.16 cm.

The sheet is then biaxially oriented to provide backing film 12 having the following desired characteristics and properties:
1. A single azimuthal scan maximum as measured by a WAXS transmission azimuthal scan as described herein;
2. The maximum being positioned at an angle within about ±75°, preferably about ±45°, and more preferably about ±25° with respect to reference direction R;
3. The breadth of the single azimuthal scan maximum (the angular full width at half peak maximum) of from about 40° to about 75°;
4. A tensile elongation-to-break in the reference direction of from about 45% to about 90%, more preferably from about 45% to 80%, as determined by the method described below;
5. An energy to sever of less than about 350 N-cm/cm² when severed using a metal serrated dispenser cutting blade according to the test described below;
6. An energy to sever of less than about 700 N-cm/cm² when severed using an injection molded polystyrene dispenser cutting blade according to the test described below;
7. Stretch during severing of less than about 4%, preferably less than about 3% when severed according to the test method described below.

In one preferred embodiment, the film 12 is an isotactic polypropylene film that has been biaxially oriented so as to have a crystalline morphology satisfying conditions 1-4 above. It is preferred, although not required, that such a film 12 additionally satisfies conditions 5, 6, and/or 7, taken individually or in any combination.

In another preferred embodiment, film 12 is an isotactic polypropylene film that has been biaxially oriented so as to satisfy conditions 4 and 5 above. It is preferred, although not required, that such a film 12 additionally satisfies conditions 1, 2, 3, 6, and/or 7, taken individually or in any combination.

In still another preferred embodiment, film 12 is an isotactic polypropylene film that has been biaxially oriented so as to satisfy conditions 4 and 6 above. It is preferred, although not required, that such a film 12 additionally satisfies conditions 1, 2, 3, 5, and/or 7, taken individually or in any combination.

In yet a further preferred embodiment, film 12 is an isotactic polypropylene film that has been biaxially oriented so as to satisfy conditions 4 and 7 above. It is preferred, although not required, that such a film 12 additionally satisfies conditions 1, 2, 3, 5, and/or 6, taken individually or in any combination.

The preferred morphology described herein may be obtained by any suitable method and apparatus for biaxially orienting the film 12. Of all stretching methods, the methods most preferred for commercial manufacture of films for tape backings include biaxial stretching by mechanical tenter such as the methods and apparatus disclosed in U.S. Patent Nos. 4,330,499 and 4,595,738, and the methods and tenter apparatus disclosed in U.S. Patent Nos. 4,675,582; 4,825,111; 4,853,602; 5,036,262; 5,051,225; and 5,072,493.

The films useful in this invention, when used as a backing 12 for a tape 10, preferably have a final thickness between about 0.002-0.005 cm. Thicker and thinner films may be used, with the understanding that the film 12 should be thick enough to avoid excessive flimsiness and difficulty in handling, while not being so thick so as to be undesirably rigid or stiff and difficult to handle or use.

Whereas in the prior art, tape severability was believed to result primarily from the magnitude of the overall film stretching, the present inventors have found that the magnitude of overall stretching is not determinate, and is much less important than the specific distribution of crystalline fibril morphologies which result from stretching. Thus, for samples prepared from the same cast sheet and stretched to the same final area stretch ratio, energy to sever is unexpectedly found to dramatically decrease as the orientation state more closely follows points (1) to (4) listed above.

An example of WAXS results illustrating points (1) to (3) above is shown in Figure 2. The scattered radiation frequency count is indicated on the vertical axis and the angular position relative to direction R is indicated on the horizontal axis. It is seen that there is a single peak 30. Peak 30 is located at an angle of 0° relative to the reference direction R. The half peak value on either side of peak 30 is indicated at 32. The breadth of the angular full width at half peak maximum is indicated as the angular difference from angular position A to angular position B. Figure 2 illustrates that portion of the azimuthal scan from ±90° about the reference direction R. A mirror image of the curve exists in the remainder of the 360° scan.

The energy required to sever biaxially oriented polypropylene adhesive tapes depends on the direction in which the crystalline fibrils are oriented with respect to the direction in which the tape is to be severed. If the fibrils are not well aligned with the load direction (also referred to herein as the use direction and dispense direction), energy must be expended both to re-align the fibrils in the direction of the load and subsequently to deform those fibrils to their breaking point. In particular, films which have been stretched in a way that results in more than one maximum of fibril orientation as observed from WAXS measurements will require a large amount of energy to realign and break these structures to sever the film. Film that has been sequentially stretched typically has more than one maximum of fibril orientation.

It is believed that the tape backing films of the present invention have preferred molecular chain orientation distributions and are particularly easy to sever. Tapes described herein are believed to possess a favorable molecular and fibril alignment that minimizes the re-alignment required to bring the fibril distributions into full alignment. The lower level of energy thus required to re-align and break the fibrillar structures confers easier severability.

In general, single peak fiber distributions which are aligned sufficiently closely to the severing direction, or reference direction display the easiest severability. Unexpectedly, too narrow of a distribution along the reference direction does not necessarily lead to improved severability. We have discovered that too narrow of a distribution actually results in undesirably high energies to sever. This is believed to be due to over-tensilization of the morphological structure along that orientation axis, which makes the structure extremely stiff and overly strong so that the energy to sever increases as the orientation distribution decreases. We have discovered that the full width at half maximum breadth of the crystalline orientation distribution as measured using WAXS monoclinic (110) reflections is preferably from about 40° to about 75°.

The present inventors have discovered unexpectedly that specific molecular chain orientations in the biaxially oriented polypropylene films of the present invention result in films having desirable mechanical properties and are surprisingly easy to sever using commercial tape dispensers. Examples of commercial tape dispensers include SCOTCH brand Cat. 15 or Cat. 40 tabletop tape dispenser equipped with metal cutting blades and Cat. 25 or Cat. H-125/126 two-piece plastic dispensers equipped with metal cutting blades, all available from Minnesota Mining and Manufacturing Company, St. Paul, Minnesota.

The present inventors also have found surprisingly that the films of this invention are severable using commercial hand-held plastic tape dispensers such as SCOTCH brand Cat. 104 or Cat. 105 injection-molded polystyrene dispensers with plastic cutting blades, also available from Minnesota Mining and Manufacturing Company, St. Paul, Minnesota. By comparison, other biaxially oriented polypropylene films stretched to the same extent as determined by area stretch ratio, but not having the preferred morphology orientation described herein, are not readily severable on such plastic cutting blades.

The adhesive 18 coated on the first major surface 14 of tape backing 12 may be any suitable adhesive as is known in the art. Preferred adhesives are those activatable by pressure, heat or combinations thereof. Suitable adhesives include those based on acrylate, rubber resin, epoxies, urethanes or combinations thereof. The adhesive 18 may be applied by solution, water-based or hot-melt coating methods. The adhesive may be applied in any desired amount, and typically are applied to provide a conventional dry coating weight between about 0.0015 to 0.005 grams/cm².

The film backing 12 of the tape 10 may be optionally treated by exposure to flame or corona discharge or other surface treatments including chemical priming to improve adhesion of subsequent coating layers. In addition, the second surface 16 of the film backing 12 may be coated with optional low adhesion backside materials 20 to restrict adhesion between the opposite surface adhesive layer 18 and the film 12, thereby allowing for production of adhesive tape rolls capable of easy unwinding, as is well known in the adhesive coated tape-making art.

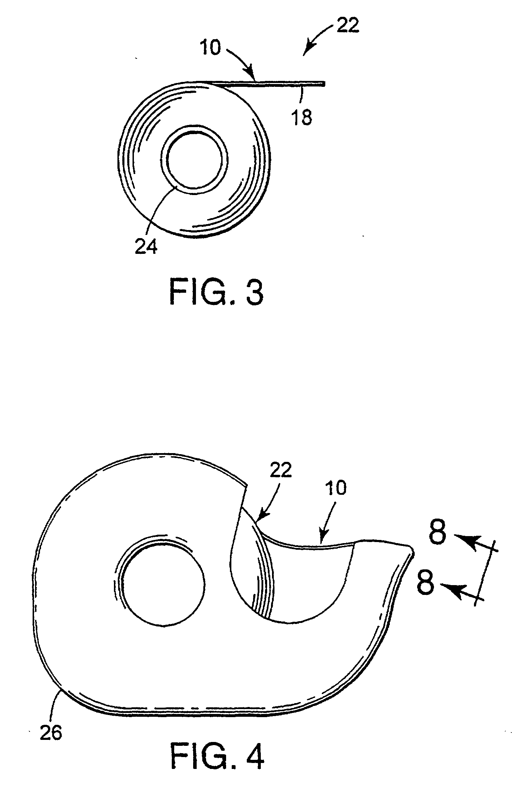

Tape 10 is preferably provided in the form of a spirally wound roll 22 and optionally on a core 24 as illustrated n Figure 3. Such rolls can be provided on a table top or hand held dispenser 26 as illustrated in Figure 4. The dispensers can include a metal cutting blade or plastic cutting blade. Preferred dispensers include those available as SCOTCH brand Cat. 15 or Cat. 40 tabletop tape dispenser equipped with metal cutting blades, SCOTCH brand Cat. 25 or Cat. H-125/126 two-piece plastic dispensers equipped with metal cutting blades, and SCOTCH brand Cat. 104 or Cat. 105 injection-molded polystyrene dispensers with plastic cutting blades, all available from Minnesota Mining and Manufacturing Company, St. Paul, Minnesota.

The details of converting film backings into tapes is well within the skill of those in the art, and need not be described in any greater detail herein. See, for example, U.S. Patent No. 4,451,533, "Dispensable Polypropylene Adhesive-Coated Tape," (Wong et al).

### Test Methods

### Tensile Properties:

### ASTM D-882-95A, Tensile Properties of Thin Plastic Sheeting, Method A

The tensile elongation-at-break of films was measured by the procedures described in ASTM D-882-95A, "Tensile Properties of Thin Plastic Sheeting," Method A. The films were conditioned for 24 hours at 25° C and 50% relative humidity. The tests were performed using a tensile-testing machine commercially available as a Model 1/S, from Sintech of Stoughton, MA. Specimens for this test were 1.91 cm wide and 15 cm in length. An initial jaw separation of 10.2 cm and a crosshead speed of 30 cm/min were used. Specimens were tested for each sample in the reference direction of the film. Results are reported in Table 1 below. The elongation-to-break values are reported for the reference direction based on the initial gauge length of the sample. As used herein, including the claims, the term "tensile elongation to break" is used to describe results obtained by the just-described method.

### Severance Properties: Dispense Testing of Films

Test specimens 1.91 cm wide and 15 cm long were slit from uncoated sample films using a razor blade cutter equipped with new blades. Test specimens were conditioned for 24 hours at 25° C and 50% relative humidity prior to testing.

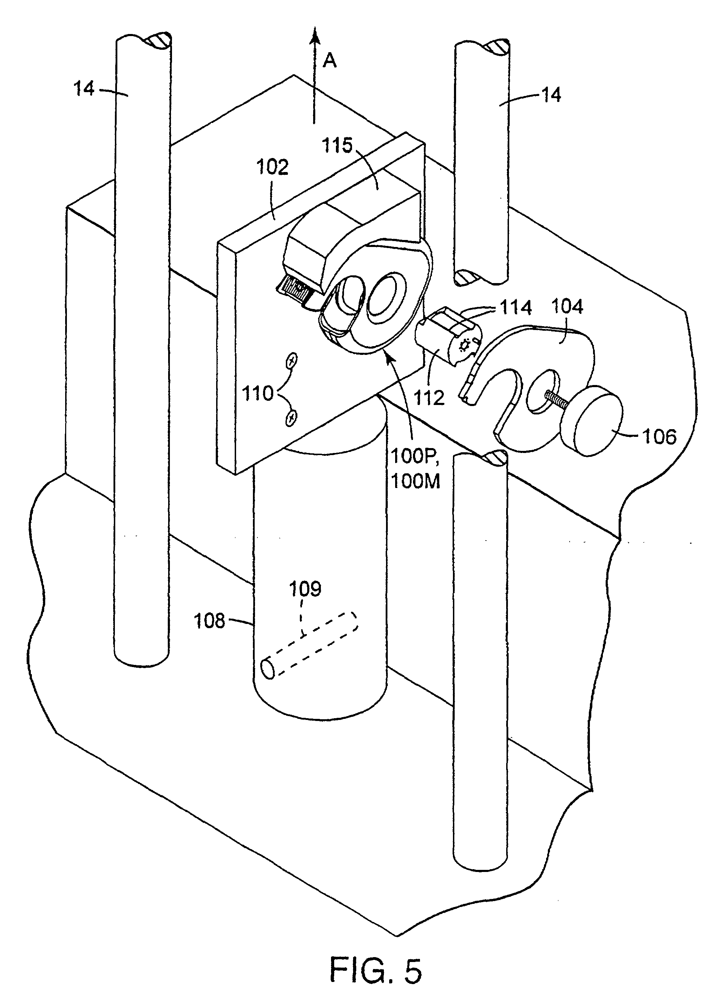

The test fixture used to measure severability of films is shown in Figure 5. The test fixture comprised a commercially available tape dispenser 100M (Scotch™ Cat. H-127 two-piece polystyrene molded dispenser equipped with a metal cutting blade, available as of the filing date hereof from Minnesota Mining & Manufacturing Co., St. Paul, MN) or commercially available tape dispenser 100P (Scotch™ Cat. 122 two-piece molded polystyrene dispenser equipped with a plastic cutting blade, available as of the filing date hereof from Minnesota Mining & Manufacturing Co., St. Paul, MN) mounted to a 15.2 cm x 15.2 cm x 1.1 cm aluminum rear mounting plate 102. The dispenser was restricted from flexing during the severing test by being placed between the rear mounting plate 102 and a 0.3 cm thick aluminum front mounting plate 104 milled to the contour of the test dispenser 100P or 100M. The test dispenser was firmly held in place between the front 104 and rear 102 mounting plates by a threaded thumbscrew 106. The rear mounting plate 102 was affixed to a 2.4 cm diameter cylindrical base mounting stud 108 by machine screws 110. The base mounting stud 108 was milled to include a 90° angle cut-out so that the rear mounting plate 102 was held in the vertical centerline of the tensile testing machine, that is, the angle between the axis of the rear mounting plate 102 and test dispenser 100P or 100M was 0° with respect to the machine centerline. The base stud 108 was affixed to the testing machine deck by locking pins inserted into drillouts 109 in the base stud.

The test dispenser 100M or 100P was mounted onto the rear mounting plate 102 by inserting the dispenser hub over an aluminum hub mounting shaft 112 which is screwed into the rear mounting plate 102. The bottom of the dispenser rested against seat 115 which prevented rotation of the dispenser during testing. The test dispenser was mounted so that the row of teeth of the dispenser cutting blade was perpendicular to the machine centerline. In this way, the film being tested was loaded substantially uniformly across its width when severed.

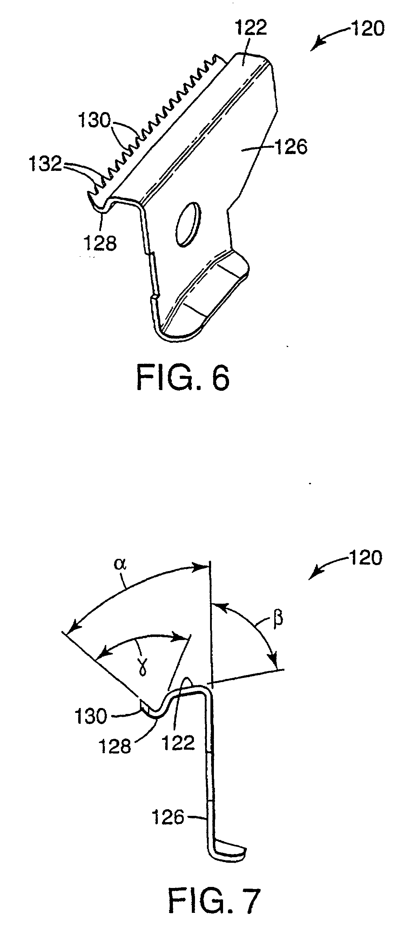

Dispenser 100M included a steel serrated cutting blade 120 illustrated in Figures 6 and 7. Steel cutting blade 120 was formed of about 0.05 cm thick nickel plated steel and included a rectangular land portion 122 at least as wide as the film 12 and about 0.3 cm long in the direction corresponding to the reference direction R of the film 12 extending across the blade. The land portion 122 defines a generally planar surface to which the test sample is temporarily secured. Blade 120 also included a blade support 126 at the rear edge of the land portion 122, with the land portion forming an angle β of 80° with the blade support 126. Blade support 126 is about 1.32 cm long. Blade 120 further included a generally U-shaped portion 128 at the edge of the land portion opposite the support portion which has a row of teeth 130 along its distal edge. Each tooth 130 is generally triangular, has a tip in or slightly lower than the plane of the land portion 122 and spaced from the tips of adjacent teeth 130 by about 0.12 cm, is defined by a height of about 0.06 cm, a sharpness defined by a radius of curvature of about 0.003 cm, and the apex 132 of said teeth 130 form an included angle of 60°. The teeth 130 project outward from the plane of the blade support portion 126 at an angle α of about 50°. The sides of the generally U-shaped portion 128 are at an angle γ to one another of 72°.

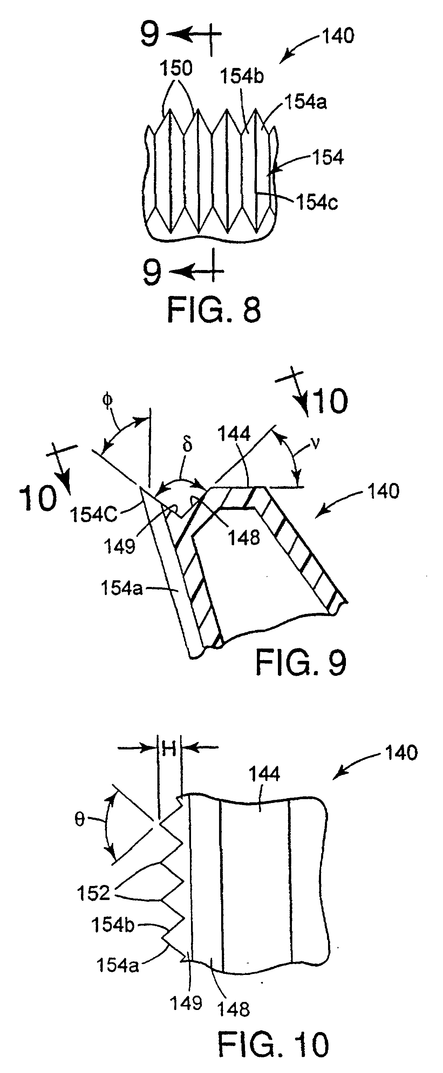

Dispenser 100P includes an injection-molded polystyrene blade 140 illustrated in Figures 8-10. Polystyrene blade 140 on dispenser 100P is integrally molded with one of the two halves of the tape dispenser 100P. Blade 140 is formed by filling the cavities of a steel mold using a typical injection molding process. As seen in Figures 9 and 10, blade 140 includes a land surface 144 which is about 0.35 cm wide. Land surface 144 is slightly convex, having a radius of curvature of 2.54 cm. Forward of land surface 144 is a V-shaped portion formed by surfaces 148 and 149 which meet at an inside angle δ of 125°. Surface 148 of the V-groove makes an angle of ν with the linear approximation of land surface 144 of 70°. A series of ridges 154 extend from the front of the dispenser. The ridges 154 are each formed by sides 154a and 154b which meet at ridge 154c. Each tooth peak 150 is formed by the intersection of surface 149 with the ridges 154. As best seen in Figures 8 and 10, each tooth is thereby formed by the intersection of three planes: sides 154a and 154b of ridge 154, and surface 149 of the V-shaped groove. As seen in Figure 10, sides 154a and 154b meet an at included angle θ of 74°. As seen in Figure 9, surface 149 forms an angle φ of 50° with edge 154c of ridge 154. Each tooth 150 has a tip in or slightly lower than the plane of the land surface 144 and is spaced from the tips of adjacent teeth 150 by about 0.127 cm. Each tooth has a height of about 0.020 cm, measured as the height H from the peak of the tooth to the adjoining valleys between teeth. Each tooth has an edge sharpness having a radius of curvature of about 0.010 cm.

In either test dispenser, a piece of double-coated adhesive tape (Scotch™ Cat. 665) was applied to land surface 122 or 144 and the test specimen 12 was adhered firmly to the adhesive surface of the double-coated tape with finger pressure to prevent forward motion during severance testing.

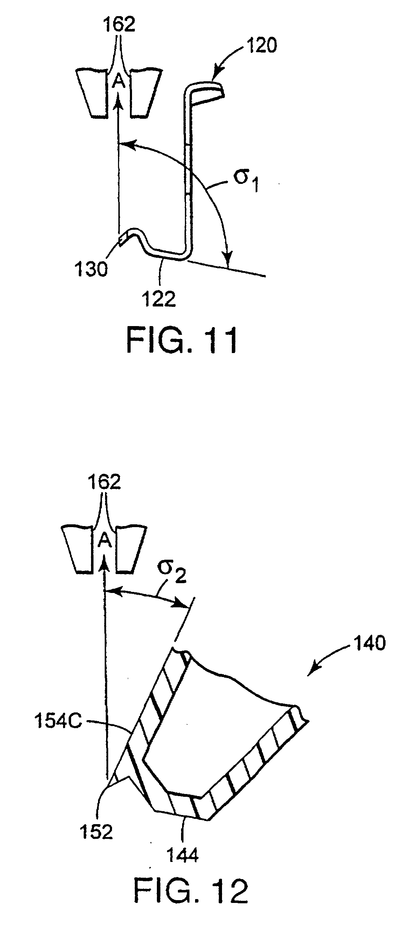

The test specimen was aligned at an angle of 0° to the machine centerline so that the force of the dispenser was substantially evenly distributed across the width of the sample. The dispenser 100M or 100P was oriented such that the tips of the cutting blade 120 or 140 were directly under the jaws 162. For tests using the dispenser 100M with metal blade dispenser 120, the dispenser was oriented at an angle such that the land portion 122 was at an angle σ₁ of 110° relative to the vertical direction of travel A of the tester (see Figure 11, which illustrates only the cutter blade 120 relative to the jaws 162, with the rest of the dispenser and test fixture removed for illustrative purposes only). For tests using the dispenser 100P with plastic blade 140, the dispenser was oriented at an angle such that the edge 154c of ridge 154 was at an angle σ₂ of 32° relative to the vertical direction of travel A of the tester (see Figure 12, which illustrates only the cutter blade 140 relative to the jaws 162, with the rest of the dispenser and test fixture removed for illustrative purposes only).

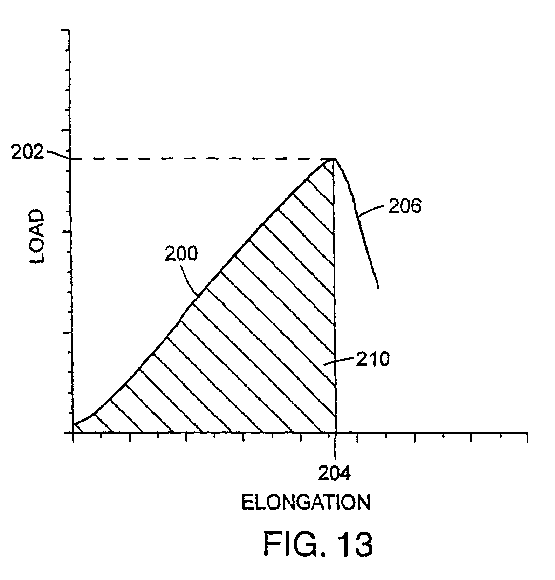

The free end of the test specimen 12 was then gripped in the upper jaws 162 of the tensile testing machine so that the distance between the upper jaws and the cutting blade 120 or 140 was 10.2 cm. The specimen was loaded with no tension so that the cutting blade did not contact the specimen prior to the start of the test. The upper jaws were attached to the machine crosshead which traveled on support rails 14. The test specimen was next pre-loaded in tension to a value of 0.9 N to make contact with the cutting blade 120 or 140. The specimen 12 was then pulled in direction A by the jaws 162 at a rate of 30 cm/minute. The load and elongation of the specimen were measured and recorded, and the energy to sever a specimen 12 was calculated from the area under the load/elongation, as illustrated in Figure 13, and reported in Table 1. In Figure 13, the load is indicated along the vertical axis, with the elongation indicated on the horizontal axis. The load and elongation increase along portion 200 of the curve, until the peak load 202 is reached, where the elongation is indicated by 204. The load then decreases as the elongation continues along portion 206 of the curve. As reported herein, the energy is calculated for that portion of the curve from zero elongation to the elongation 204 at maximum load 202. It is believed that the teeth of the dispenser puncture the film at about the point of maximum load 202, at which time the load decreases as the punctures through the film propagate to complete severance.

As used herein, including the claims, the term "The Dispense Test - Metal Blade" refers to the just described test using dispenser 100M, and the term "The Dispense Test - Plastic Blade" refers to the just described test using dispenser 100P.

### Optical Microscopy of Severed Film Edges

Severed test specimens obtained from the Dispense Test - Plastic Blade were mounted on a glass microscope slide to obtain images of the severed edges. An Olympus BHSM Type BH-2 optical microscope available commercially from Leeds Precision Instruments. Inc., Minneapolis, MN and equipped with crossed polarization and differential interference contrast (DIC) was used to obtain the images. Photographic images were obtained at a magnification of 50X using Polacolor ER Type 59 instant developing film with an ASA of 80 and a Polaroid 4x5 flat film holder.

### Wide Angle X-Ray Scattering (WAXS) Measurements

Wide angle X-Ray Diffraction data (WAXS) were collected by use of a Picker 4-circle diffractometer, copper Kα radiation, and scintillation detector registry of the scattered radiation. The diffractometer was fitted with fixed entrance slits and a fixed receiving slit. A transmission data collection geometry was employed with the effective reference direction axis oriented vertically and coincident with the diffractometer 2θ axis. The X-ray generator was operated at settings of 40kV and 25 mA. Specimens were mounted on aluminum holders using double coated adhesive tape with no backing plate or support used under the portion of the film exposed to the incident X-Ray beam.

Polypropylene peak positions were located from survey step scans conducted from 5 to 35 degrees (2θ) using a 0.05 degree step size and 30 second count time. Azimuthal step scans of the polypropylene monoclinic (110) maximum were conducted from instrument settings of -180 to +180 degrees (X) using a three degree step size and 10 minute count time. The resulting scattering data were reduced to x-y pairs of azimuthal angle and intensity values and subjected to profile fitting using the data analysis software ORIGIN™ (ORIGIN™ version 4.1 available from Microcal Software Inc., One Roadhouse Plaza, Northhampton, MA. 01060). A gaussian shape model was employed to describe observed intensity maxima in the azimuthal scans. Widths measured in the profile fitting procedures described above were taken as the full width at half maximum (FWHM) above a linear background model. The results of the WAXS are presented in Table 1.

The operation of the present invention will be further described with regard to the following detailed examples. These examples are offered to further illustrate the various specific and preferred embodiments and techniques. As the examples illustrate, the desired properties of the film are obtained by stretching the film in a way to obtain the preferred morphology of films described herein, rather than defining the film by describing nominal machine draw ratios as has been commonly taught in the art. It should be understood, however, that many variations and modifications may be made while remaining within the scope of the present invention.

### Examples 1-15

For Examples 1-15, a cast film was obtained as follows. An isotactic polypropylene homopolymer resin having a nominal melt flow index of 2.5 g/10 minutes obtained from FINA Oil and Chemical Co., Dallas, TX, having the commercial designation 3374, was fed into the feed hopper of a 4,45 cm single screw extruder manufactured from H.P.M (Mt. Gilead, OH) having an extruder barrel temperature adjusted to produce a stable homogeneous melt. The polypropylene melt was extruded through a 17.8 cm single manifold sheet die onto a rotating water cooled steel casting wheel which had about 50-60° C water circulating through it. The cast sheet was next passed through a quenching water bath maintained at about 30°C to produce a cast sheet having a thickness of about 0.12-0.16 cm. The cast film was then stretched by the specific methods described in each example. In those examples that were simultaneously stretched in two directions, the individual stretch components in each of the two direction started and ended at the same time.

Samples prepared in accordance with Examples 1-8 were tested for severability by the test method described above using a metal cutting blade. Samples prepared in accordance with Examples 9-15 were tested for severability by the test method described above using a polystyrene cutting blade. Samples from each Example were also subjected to the WAXS analysis described herein to determine the morphology of the films. Samples from each Example were also tested for tensile elongation at break by the method described above. The prefix C is used to indicate comparative examples.

### Example C-1

A sequentially biaxially oriented polypropylene film was prepared by a process known as the tenter process. The cast sheet was passed over a first series of heating rolls maintained internally from about 127°C to 136°C, and then stretched between two nipped drawing rolls rotating at different speeds to attain a first draw ratio of 5.0:1 in extrusion or casting direction, which is reference direction R for this Example. The uniaxially stretched sheet was then fed into a tenter oven with multiple heat zones having temperatures ranging from 158° to 175° C and stretched between two tenter rails in the direction perpendicular to the first stretching at a draw ratio of about 9:1. The resulting film had a thickness of 0.0030 cm and was cooled in air and annealed on an annealing drum with an internal temperature of 120°C. The edges were subsequently razor slit and the film wound onto a master roll. The film was slit into useful sample widths using a razor blade cutter equipped with new blades.

### Example C-2

A biaxially oriented polypropylene film was prepared by stretching the cast sheet simultaneously in two perpendicular directions using a laboratory two-way film stretching machine known as a frame or batch stretcher as follows. The cast film sheet of 0.16 cm thickness was cut into square tablets of 6.83 cm on a side and held in the stretching oven of the batch stretcher by edgewise gripping with a series of clips to leave a stretchable sample of 5.08 cm on a side. The tablet was pre-heated for 90 seconds at 155° C. then simultaneously stretched at a rate of about 300%/second in the reference direction and about 300%/second in the direction perpendicular to the reference direction to a final area stretch ratio of about 40:1. Samples were immediately removed from the stretching machine to cool. The film had a thickness of 0.0030 cm. The film was slit into useful sample widths using a razor blade cutter equipped with new blades.

### Example 3

A simultaneously biaxially oriented polypropylene film was prepared by stretching as described in Example 2, except that the stretch rates and final area stretch ratio were as follows. The tablet was pre-heated for 90 seconds at 155° C, then simultaneously stretched at a rate of about 300%/second in the reference direction and about 245%/second in the direction perpendicular to the first to a final area stretch ratio of about 40:1. Samples were immediately removed from the stretching machine to cool. The film had a thickness of 0.0025 cm. The film was slit into useful sample widths using a razor blade cutter equipped with new blades.

### Example C-4

A simultaneously biaxially oriented polypropylene film was prepared by stretching as described in Example 2, except for the final area stretch ratio obtained as follows. The tablet was pre-heated for 90 seconds at 155° C, then stretched simultaneously at a rate of about 300%/second in the reference direction and about 300%/second in the direction perpendicular to the reference direction to a final area stretch ratio of about 50:1. Samples were immediately removed from the stretching machine to cool. The film had a thickness of 0.0034 cm. The film was slit into useful sample widths using a razor blade cutter equipped with new blades.

### Example 5

A simultaneously biaxially oriented polypropylene film was prepared by stretching as described in Example 2, except for the stretch rates and final area stretch ratio as follows. The tablet was pre-heated for 90 seconds at 155° C, then simultaneously stretched at a rate of about 300%/second in the reference direction and about 210%/second in the direction perpendicular to the first to a final area stretch ratio of about 50:1. Samples were immediately removed from the stretching machine to cool. The film had a thickness of 0.0025 cm. The film was slit into useful sample widths using a razor blade cutter equipped with new blades.

### Example C-6

A simultaneously biaxially oriented polypropylene film was prepared by stretching as described in Example 2, except for the final area stretch ratio. The tablet was pre-heated for 90 seconds at 155° C, then simultaneously stretched at a rate of about 300%/second in the reference direction and about 300%/second in the direction perpendicular to the reference direction to a final area stretch ratio of about 60:1. Samples were immediately removed from the stretching machine to cool. The film had a thickness of 0.0021 cm. The film was slit into useful sample widths using a razor blade cutter equipped with new blades.

### Example 7

A simultaneously biaxially oriented polypropylene film was prepared by stretching as described in Exarnple 2 except for the stretch rates and final area stretch ratio. The tablet was pre-heated for 90 seconds at 155° C, then simultaneously stretched at a rate of about 300%/second in the reference direction and about 250%/second in the direction perpendicular to the first to a final area stretch ratio of about 60:1. Samples were immediately removed from the stretching machine to cool. The film had a thickness of 0.0022 cm. The film was slit into useful sample widths using a razor blade cutter equipped with new blades.

### Example 8

A simultaneously biaxially oriented polypropylene film was prepared by stretching as described in Example 2 except for the stretch rates and final area stretch ratio. The tablet was pre-heated for 90 seconds at 155° C, then simultaneously stretched at a rate of about 300%/second in the reference direction and about 168%/second in the direction perpendicular to the reference direction to a final area stretch ratio of about 60:1. Samples were immediately removed from the stretching machine to cool, The film had a thickness of 0.0031 cm. The film was slit into useful sample widths using a razor blade cutter equipped with new blades.

### Example C-9

A simultaneously biaxially oriented polypropylene film was prepared by stretching as described in Example 2 except for the stretch rates and the final area stretch ratio. The tablet was pre-heated for 90 seconds at 155° C, then simultaneously stretched at a rate of about 165%/second in the reference direction and about 300%/second in the direction perpendicular to the first to a final area stretch ratio of about 53:1. Samples were immediately removed from the stretching machine to cool. The film had a thickness of 0.0027 cm. The film was slit into useful sample widths using a razor blade cutter equipped with new blades.

### Example C-10

A simultaneously biaxially oriented polypropylene film was prepared by stretching as described in Example 2. The tablet was pre-heated for 90 seconds at 155° C, then simultaneously stretched at a rate of about 300%/second in the reference direction and about 300%/second in the direction perpendicular to the first to a final area stretch ratio of about 40:1. Samples were immediately removed from the stretching machine to cool. The film had a thickness of 0.0033 cm. The film was slit into useful sample widths using a razor blade cutter equipped with new blades.

### Example 11

A simultaneously biaxially oriented polypropylene film was prepared by stretching as described in Example 2 except for the final area stretch ratio. The tablet was pre-heated for 90 seconds at 155° C, then simultaneously stretched at a rate of about 300%/second in the reference direction and about 300%/second in the direction perpendicular to the first to a final area stretch ratio of about 55:1. Samples were immediately removed from the stretching machine to cool. The film had a thickness of 0.0020 cm. The film was slit into useful sample widths using a razor blade cutter equipped with new blades.

### Example C-12

A simultaneously biaxially oriented polypropylene film was prepared by stretching as described in Example 2 except for the stretch rates and the final area stretch ratio. The tablet was pre-heated for 90 seconds at 155° C, then simultaneously stretched at a rate of about 300%/second in the reference direction and about 167%/second in the direction perpendicular to the first to a final area stretch ratio of about 45:1. Samples were immediately removed from the stretching machine to cool. The film had a thickness of 0.0029 cm. The film was slit into useful sample widths using a razor blade cutter equipped with new blades.

### Example C-13

A sequentially biaxially oriented polypropylene film was prepared by stretching as described in Example 1. The final thickness of the film was 0.0028 cm.

### Example C-14

A sequentially biaxially oriented polypropylene film was prepared by stretching as described in Example 1, except the reference direction was taken to be the direction of the second stretch (TD). The final film thickness was 0.0030 cm.

### Example C-15

A re-tensilized, sequentially biaxially oriented polypropylene film was stretched by the method of Example 1, except as follows. The second (transverse) stretching step was done at a ratio of about 6:1. Upon exiting from the tenter stretching step, the film was then passed over a series of heating rolls maintained internally at about 110°-140° C to re-stretch the film in the direction of the first stretching step at a draw ratio of about 2.4:1 to a final area stretch ratio of about 72:1. Elongation and transversal shrinkage resulted in a film having a finished thickness of about 0.0030 cm. This film was slit into useful sample widths using a razor blade cutter equipped with new blades.

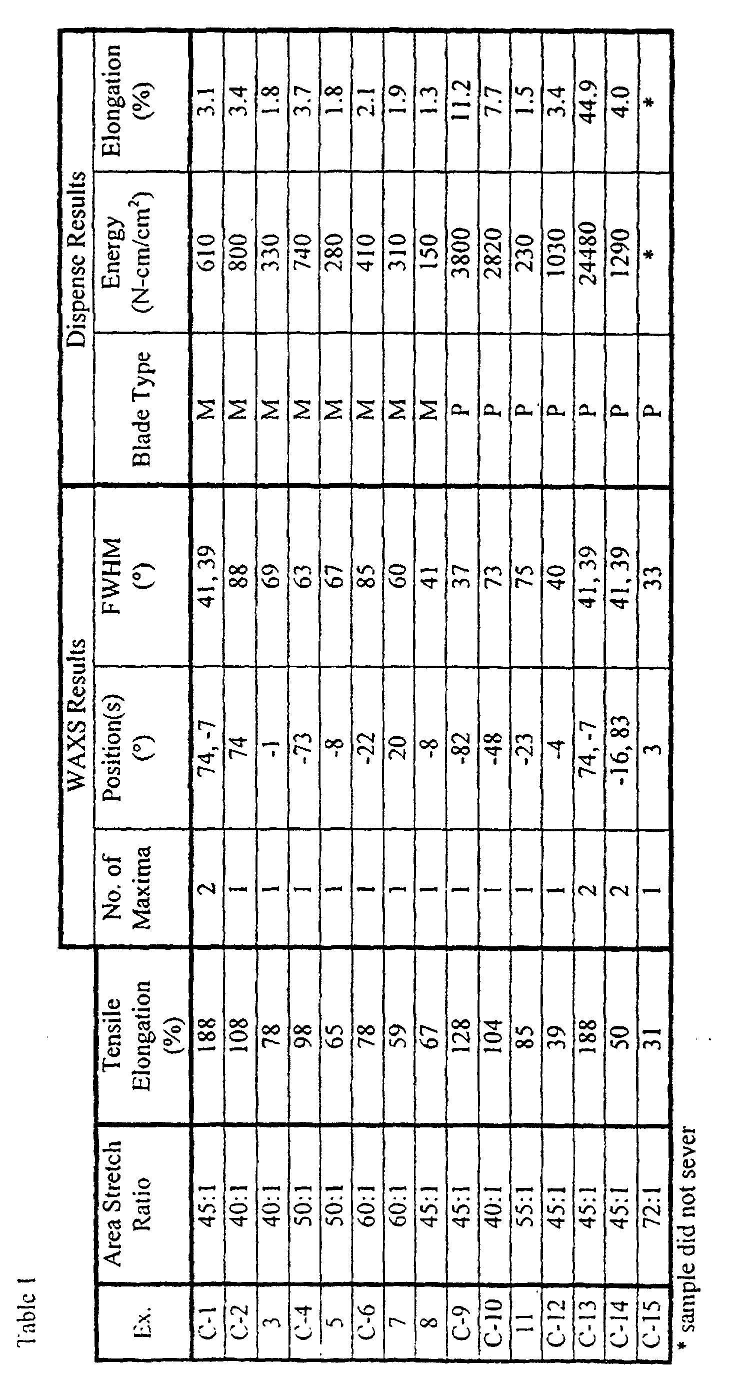

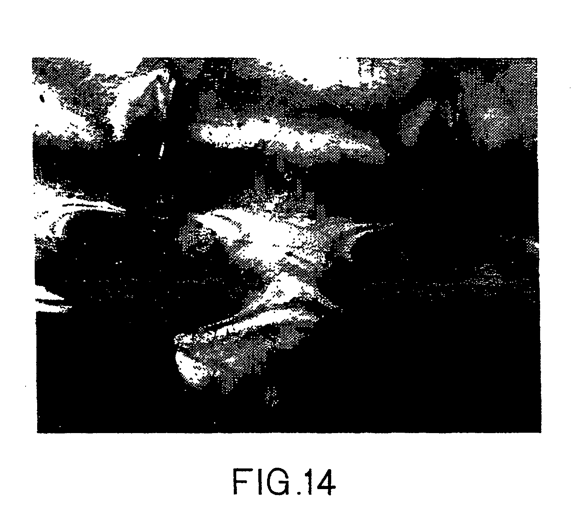

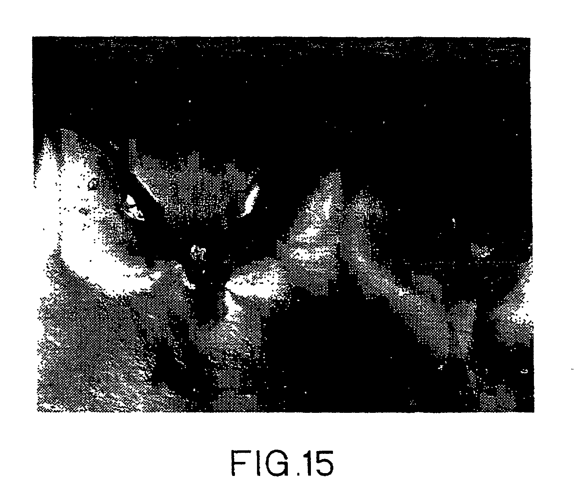

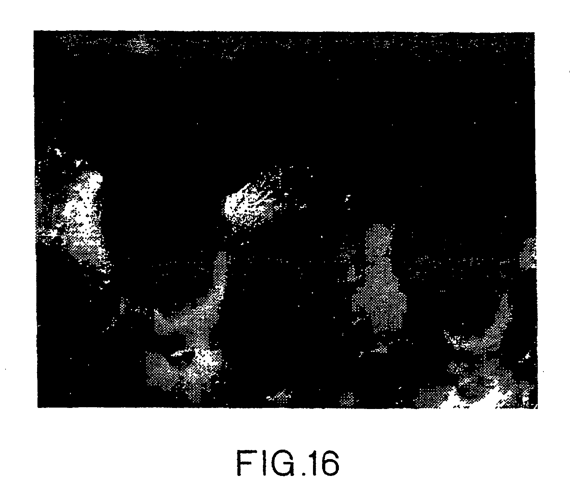

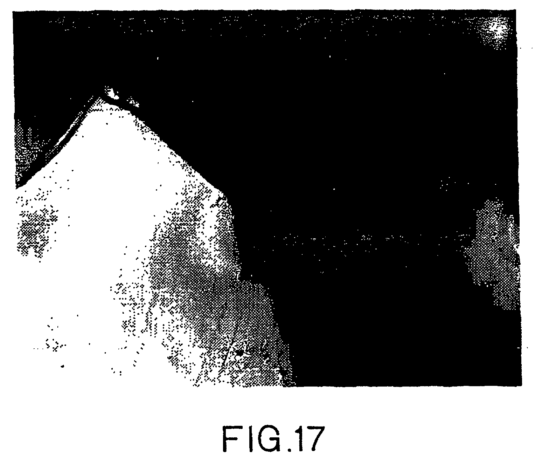

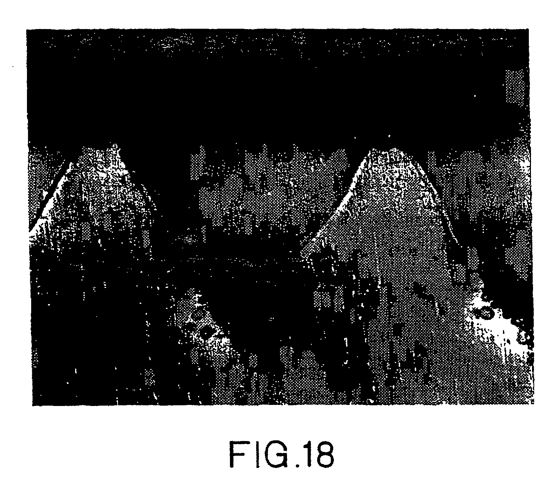

Photographic images taken of some Examples by the Optical Microscopy procedure described above are provided in Figures 14-18. Figure 14 shows comparative example C-1, a sequentially biaxially oriented polypropylene film. It is seen that the serrated edge does not closely follow the contour of the cutting teeth of the plastic dispenser blade. Figure 15 shows a sample according to comparative example C-1, which had a coating a pressure sensitive adhesive applied on the first major surface. It is seen that an adhesive tape made of the backing of C-1 also does not closely follow the contour of the cutting teeth. Figure 16 shows the simultaneously oriented film of comparative example C-4, the serrated edge of which does not closely follow the contour of the plastic cutting teeth. Figure 17 shows the inventive film of example 3, the serrated edge of which closely follows the contour of the plastic cutting blade. Figure 18 illustrates the serrated edge of a prior art acetate-backed pressure sensitive adhesive. It is seen that the inventive film of shown in Figure 17 performs as well as the more expensive acetate-backed adhesive tape of Figure 18.

The tests and test results described above are intended solely to be illustrative, rather than predictive, and variations in the testing procedure can be expected to yield different results.

## Claims

1. A film comprising isotactic polypropylene;
wherein said film includes a reference direction, and wherein said film has been biaxially oriented so as to provide a crystalline orientation as determined by wide angle X-ray scattering measurements from the monoclinic (110) crystalline planes, said crystalline orientation including:
a) a single azimuthal scan maximum positioned at an angle of up to ± 75° relative to said reference direction; and
b) an angular full width at half peak of from 40° to 75°; and
wherein said film has a tensile elongation to break measured in said reference direction of from 45% to 90% (measured according to ASTM D-882-95A).

2. The film of claim 1, wherein when said film is severed according to The Dispense Test - Metal Blade (as described in the part Test Methods of the description), said film has an energy to sever of up to 350 N-cm/cm².

3. A film comprising isotactic polypropylene, wherein said film includes a reference direction, and wherein said film has been biaxially oriented such that:
a) said film has a tensile elongation to break measured in said reference direction of from 45% to 90% (measured according to ASTM D-882-95A); and
b) when said film is severed in said reference direction according to The Dispense Test - Metal Blade (as described in the part Test Methods of the description), said film has an energy to sever of up to 350 N-cm/cm².

4. The film of claim 2 or 3, wherein said film stretches up to 4% when severed according to The Dispense Test - Metal Blade.

5. The film of claim 2 or 3, wherein when said film is severed according to The Dispense Test - Metal Blade, said film exhibits a serrated edge that closely corresponds to the contour of the metal blade.

6. The film of claims any one of 1 to 3, wherein when said film is severed according to The Dispense Test - Plastic Blade (as described in the part Test Methods of the description), said film has an energy to sever of up to 700 N-cm/cm².

7. A film comprising isotactic polypropylene, wherein said film includes a reference direction, and wherein said film has been biaxially oriented such that:
a) said film has a tensile elongation to break measured in said reference direction of from 45% to 90% (measured according to ASTM D-882-95A); and
b) when said film is severed in said reference direction according to The Dispense Test - Plastic Blade (as described in the part Test Methods of the description), said film has an energy to sever of up to 700 N-cm/cm².

8. The film of claim 1 or 7, wherein said film stretches up to 4% when severed according to The Dispense Test - Plastic Blade.

9. A film comprising isotactic polypropylene, wherein said film includes a reference direction, and wherein said film has been biaxially oriented such that:
a) said film has a tensile elongation to break measured in said reference direction of from 45% to 90% (measured according to ASTM D-882-95A), and
b) said film stretches up to 4% when severed according to The Dispense Test - Plastic Blade (as describes in the part Test Methods of the description).

10. The film of any one of claims 1, 3, 7 or 9, wherein said film has a thickness of from 0.002 to 0.005 cm.

11. The film of claim 7 or 9, wherein when said film is severed in said reference direction according to The Dispense Test - Plastic Blade, said film has an energy to sever of up to 700 N-cm/cm².

12. The film of any one of claims 1, 2, 3, 7 or 9, wherein when said film is severed according to The Dispense Test - Plastic Blade, said film exhibits a serrated edge that closely corresponds to the contour of the plastic blade.

13. The film of any one of claims 1, 3, 7, 9, wherein said film has a tensile elongation to break measured in said reference direction of from 45% to 80%.

14. The film of any one of claims 4, 7 or 9, wherein said film has been biaxially oriented so as to provide a crystalline orientation as determined by wide angle X-ray scattering measurements from the monoclinic (110) crystalline planes, said crystalline orientation including:
a) a single azimuthal scan maximum positioned at an angle of up to ± 75° relative to said reference direction; and
b) an angular full width at half peak of from 40° to 75°.

15. The film of any one of claims 1, 7 or 14, wherein said crystalline orientation includes a single maximum positioned at an angle of up to ± 45°, preferably up to ± 25° relative to said reference direction.

16. The film of claim 9, wherein when said film is severed in said reference direction according to The Dispense Test - Metal Blade, said film has an energy to sever of up to 350 N-cm/cm².

17. An adhesive tape backing comprising:
a biaxially oriented film according to any one of claims 1 to 16.

18. The backing of claim 17, wherein said film includes a first major surface, and wherein said backing further includes an adhesive on said first major surface of said film.

19. The backing of claim 18, wherein said adhesive comprises a pressure sensitive adhesive.

20. The backing of claim 19, wherein said backing includes a width and a length, wherein said length is significantly larger than said width, wherein said reference direction is parallel to the length of said backing, and wherein said backing is spirally wound along its length so as to provide a roll of tape.

21. The backing of claim 16, wherein for a film according to claims 1 or 3 said roll is mounted on a dispenser including a metal cutting blade.

22. The backing of claim 16, wherein for a film according to claims 1, 7 or 9 said roll is mounted on a dispenser including a plastic cutting blade.

23. An adhesive tape, comprising:
a biaxially oriented film backing according to any one of claims 17 to 22.

24. An assembly of a roll of pressure sensitive adhesive tape mounted on a dispenser, the assembly comprising:
a) a roll of pressure sensitive adhesive tape, said tape comprising a biaxially oriented film backing according to claim 20 and
b) a dispenser, said dispenser including a roll mount having said roll of tape rotatably mounted thereon, and a plastic serrated cutting blade for severing said adhesive tape.

25. The assembly of claim 24, wherein said cutting blade comprises polystyrene.

## Patentansprüche

1. Isotaktisches Polypropylen umfassende Folie,
wobei die Folie eine Bezugsrichtung einschließt, und wobei die Folie biaxial orientiert ist, so dass eine durch Röntgenweitwinkelstreuungsmessungen aus monoklinischen (110) Kristallebenen bestimmte Kristallorientierung bereitgestellt wird, welche einschließt:
a) ein einziges Maximum bei der Azimutalmessung, das sich bei einem Winkel von bis zu ± 75° im Verhältnis zur Bezugsrichtung befindet, und
b) eine Halbwertsbreite des Winkels von 40° bis 75°,
und wobei die Folie eine in der Bezugsrichtung gemessene Zugdehnung beim Reißen von 45 % bis 90 % (gemessen gemäß ASTM D-882-95A) hat.

2. Folie nach Anspruch 1, wobei die Folie, wenn sie gemäß dem Abgabetest - Metallklinge (wie im Beschreibungsteil Testverfahren beschrieben) getrennt wird, eine Energie zum Trennen von bis zu 350 N-cm/cm² hat.

3. Isotaktisches Polypropylen umfassende Folie,
wobei die Folie eine Bezugsrichtung einschließt und wobei die Folie biaxial orientiert ist, so dass:
a) die Folie eine in der Bezugsrichtung gemessene Zugdehnung beim Reißen von 45 % bis 90 % (gemessen gemäß ASTM D-882-95A) hat, und
b) wenn die Folie gemäß dem Abgabetest - Metallklinge (wie im Beschreibungsteil Testverfahren beschrieben) in der Bezugsrichtung getrennt wird, die Folie eine Energie zum Trennen von bis zu 350 N-cm/cm² hat.

4. Folie nach Anspruch 2 oder 3, wobei die Folie sich bis zu 4 % dehnt, wenn sie gemäß dem Abgabetest - Metallklinge getrennt wird.

5. Folie nach Anspruch 2 oder 3, wobei die Folie, wenn die Folie gemäß dem Abgabetest - Metallklinge getrennt wird, eine gezackte Kante zeigt, die genau der Kontur der Metallklinge entspricht.

6. Folie nach einem der Ansprüche 1 bis 3, wobei die Folie, wenn die Folie gemäß dem Abgabetest - Kunststoffklinge (wie im Beschreibungsteil Testverfahren beschrieben) getrennt wird, eine Energie zum Trennen von bis zu 700 N-cm/cm² hat.

7. Isotaktisches Polypropylen umfassende Folie,
wobei die Folie eine Bezugsrichtung einschließt und wobei die Folie biaxial orientiert ist, so dass:
a) die Folie eine in der Bezugsrichtung gemessene Zugdehnung beim Reißen von 45 % bis 90 % (gemessen gemäß ASTM D-882-95A) hat, und
b) wenn die Folie gemäß dem Abgabetest - Kunststoffklinge (wie im Beschreibungsteil Testverfahren beschrieben) in der Bezugsrichtung getrennt wird, die Folie eine Energie zum Trennen von bis zu 700 N-cm/cm² hat.

8. Folie nach Anspruch 1 oder 7, wobei sich die Folie bis zu 4 % dehnt, wenn sie gemäß dem Abgabetest - Kunststoffklinge getrennt wird.

9. Isotaktisches Polypropylen umfassende Folie,
wobei die Folie eine Bezugsrichtung einschließt und wobei die Folie biaxial orientiert ist, so dass:
a) die Folie eine in der Bezugsrichtung gemessene Zugdehnung beim Reißen von 45 % bis 90 % (gemessen gemäß ASTM D-882-95A) hat, und
b) sich die Folie bis zu 4 % dehnt, wenn sie gemäß dem Abgabetest - Kunststoffklinge (wie im Beschreibungsteil Testverfahren beschrieben) getrennt wird.

10. Folie nach einem der Ansprüche 1, 3, 7 oder 9, wobei die Folie eine Dicke von 0,002 bis 0,005 cm hat.

11. Folie nach Anspruch 7 oder 9, wobei die Folie, wenn die Folie gemäß dem Abgabetest - Kunststoffklinge in der Bezugsrichtung getrennt wird, eine Energie zum Trennen von bis zu 700 N-cm/cm² hat.

12. Folie nach einem der Ansprüche 1, 2, 3, 7 oder 9, wobei die Folie, wenn die Folie gemäß dem Abgabetest - Kunststoffklinge-getrennt wird, eine gezackte Kante zeigt, die genau der Kontur der Kunststoffklinge entspricht.

13. Folie nach einem der Ansprüche 1, 3, 7, 9, wobei die Folie eine in der Bezugsrichtung gemessene Zugdehnung beim Reißen von 45 % bis 80 % hat.

14. Folie nach einem der Ansprüche 4, 7 oder 9, wobei die Folie biaxial orientiert ist, so dass eine durch Röntgenweitwinkelstreuungsmessungen aus monoklinischen (110) Kristallebenen bestimmte Kristallorientierung bereitgestellt wird, welche einschließt:
a) ein einziges Maximum bei der Azimutalmessung, das sich bei einem Winkel von bis zu ± 75° im Verhältnis zur Bezugsrichtung befindet, und
b) eine Halbwertsbreite des Winkels von 40° bis 75°.

15. Folie nach einem der Ansprüche 1, 7 oder 14, wobei die Kristallorientierung ein einziges Maximum einschließt, das sich im Verhältnis zur Bezugsrichtung bei einem Winkel von bis zu ± 45°, vorzugsweise bis zu ± 25° befindet.

16. Folie nach Anspruch 9, wobei die Folie, wenn sie gemäß dem Abgabetest - Metallklinge in der Bezugsrichtung getrennt wird, eine Energie zum Trennen von bis zu 350 N-cm/cm² hat.

17. Trägerschicht für ein Klebeband, umfassend:
eine biaxial orientierte Folie nach einem der Ansprüche 1 bis 16.

18. Trägerschicht nach Anspruch 17, wobei die Folie eine erste Hauptoberfläche einschließt und wobei die Trägerschicht außerdem auf dieser ersten Hauptoberfläche der Folie ein Klebemittel einschließt.

19. Trägerschicht nach Anspruch 18, wobei das Klebemittel ein Haftklebemittel umfasst.

20. Trägerschicht nach Anspruch 19, wobei die Trägerschicht eine Breite und eine Länge einschließt, wobei die Länge die Breite deutlich übersteigt, wobei die Bezugsrichtung parallel zur Länge der Trägerschicht ist und wobei die Trägerschicht entlang ihrer Länge spiralförmig aufgewickelt ist, wodurch eine Bandrolle bereitgestellt wird.

21. Trägerschicht nach Anspruch 16, wobei die Rolle für eine Folie nach den Ansprüchen 1 oder 3 auf einem Spender befestigt ist, der eine Metallschnittklinge einschließt.

22. Trägerschicht nach Anspruch 16, wobei die Rolle für eine Folie nach den Ansprüchen 1, 7 oder 9 auf einem Spender befestigt ist, der eine Kunststoffschnittklinge einschließt.

23. Klebeband, umfassend:
eine Trägerschicht aus einer biaxial orientierten Folie nach einem der Ansprüche 17 bis 22.

24. Aufbau aus einer Rolle eines Haftklebebandes, die auf einem Spender befestigt ist, wobei der Aufbau umfasst:
a) eine Rolle eines Haftklebebandes, wobei das Band eine Trägerschicht aus einer biaxial orientierten Folie nach Anspruch 20 umfasst, und
b) einen Spender, wobei der Spender eine Rollenbefestigung, auf der die Bandrolle drehbar befestigt ist, und eine gezackte Kunststoffschnittklinge zum Trennen des Klebebandes umfasst.

25. Aufbau nach Anspruch 24, wobei die Schnittklinge Polystyrol umfasst.

## Revendications

1. Film comprenant un polypropylène isotactique ;
dans lequel ledit film comprend une direction de référence, et dans lequel ledit film a été orienté biaxialement de manière à lui donner une orientation cristalline telle que déterminée par mesures de diffraction de rayons X aux grands angles des plaques cristallines monocliniques (110), ladite orientation cristalline comprenant :
a) un maximum de balayage azimutal simple positionné à un angle de jusqu'à ± 75° par rapport à la direction dite de référence ; et
b) une largeur angulaire totale à mi-hauteur comprise entre 40° et 75° ; et
dans lequel ledit film a un allongement à la rupture par traction mesuré dans la direction dite de référence compris entre 45 % et 90 % (mesuré selon la norme ASTM D-882-95A).

2. Film selon la revendication 1, dans lequel lorsque ledit film est soumis à la rupture selon The Dispense Test - Metal Blade (tel que décrit dans les méthodes d'essai de la description), ledit film a une énergie à la rupture de jusqu'à 350 N-cm/cm².

3. Film comprenant un polypropylène isotactique, dans lequel ledit film comprend une direction de référence, et dans lequel ledit film a été orienté biaxialement de sorte que :
a) ledit film a un allongement à la rupture par traction dans la direction dite de référence compris entre 45% et 90% (mesuré selon la norme ASTM D-882-95A) ; et
b) lorsque ledit film est soumis à la rupture dans la direction dite de référence selon The Dispense Test - Metal Blade (tel que décrit dans la partie des méthodes d'essai de la description), ledit film a une énergie à la rupture de jusqu'à 350 N-cm/cm².

4. Film selon la revendication 2 ou 3, dans lequel ledit film s'allonge de jusqu'à 4 % lorsqu'il est soumis à la rupture selon The Dispense Test - Metal Blade.

5. Film selon la revendication 2 ou 3, dans lequel lorsque ledit film est soumis à la rupture selon The Dispense Test - Metal Blade, ledit film présente un bord dentelé qui correspond étroitement au contour de la lame métallique.

6. Film selon l'une quelconque des revendications 1 à 3, dans lequel lorsque ledit film est soumis à la rupture selon The Dispense Test - Plastic Blade (tel que décrit dans la partie des méthodes d'essai de la description), ledit film a une énergie à la rupture de jusqu'à 700 N-cm/cm².

7. Film comprenant un polypropylène isotactique, dans lequel ledit film comprend une direction de référence, et dans lequel ledit film a été orienté biaxialement de sorte que :
a) ledit film a un allongement à la rupture par traction mesuré dans la direction dite de référence compris entre 45% et 90% (mesuré selon la norme ASTM D-882-95A) ; et
b) lorsque ledit film est soumis à la rupture dans la direction dite de référence selon The Dispense Test - Plastic Blade (tel que décrit dans la partie des méthodes d'essai de la description), ledit film a une énergie à la rupture de jusqu'à 700 N-cm/cm².

8. Film selon la revendication 1 ou 7, dans lequel ledit film s'allonge de jusqu'à 4 % lorsqu'il est soumis à la rupture selon The Dispense Test - Plastic Blade.

9. Film comprenant un polypropylène isotactique, dans lequel ledit film comprend une direction de référence, et dans lequel ledit film a été orienté biaxialement de sorte que :
a) ledit film a un allongement à la rupture par traction mesuré dans la direction dite de référence compris entre 45% et 90% (mesuré selon la norme ASTM D-882-95A) ; et
b) ledit film s'allonge de jusqu'à 4 % lorsqu'il est soumis à la rupture selon The Dispense Test - Plastic Blade (tel que décrit dans la partie des méthodes d'essai de la description).

10. Film selon l'une quelconque des revendications 1, 3, 7 ou 9, dans lequel ledit film a une épaisseur comprise entre 0,002 et 0,005 cm.

11. Film selon la revendication 7 ou 9, dans lequel lorsque ledit film est soumis à la rupture dans la direction dite de référencé selon The Dispense Test - Plastic Blade, ledit film a une énergie à la rupture de jusqu'à 700 N-cm/cm².

12. Film selon l'une quelconque des revendications 1, 2, 3, 7 ou 9, dans lequel lorsque ledit film est soumis à la rupture selon The Dispense. Test - Plastic Blade, ledit film présente un bord dentelé qui correspond étroitement au contour de la lame en matière plastique.

13. Film selon l'une quelconque des revendications 1, 3, 7, 9, dans lequel ledit film a un allongement à la rupture par traction mesuré dans la direction dite de référencé compris entre 45 % et 80 %.

14. Film selon l'une quelconque des revendications 4, 7 ou 9, dans lequel ledit film a été orienté biaxialement de manière à lui donner une orientation cristalline telle que déterminée par mesures de diffraction X aux grands angles des plaques cristallines (110) monocliniques, ladite orientation cristalline comprenant :
a) un maximum de balayage azimutal simple positionné à un angle de jusqu'à ± 75° par rapport à la direction dite de référence ; et
b) une largeur angulaire totale à mi-hauteur comprise entre 40° et 75°.

15. Film selon l'une quelconque des revendications 1, 7 ou 14, dans lequel ladite orientation cristalline comprend un maximum unique positionné à une angle de jusqu'à ± 45°, de préférence jusqu'à ± 25°, par rapport à la direction dite de référence.

16. Film selon la revendication 9, dans lequel lorsque ledit film est soumis à la rupture dans la direction dite de référence selon The Dispense Test - Metal Blade, ledit film à une énergie à la rupture de jusqu'à 350 N - cm².

17. Support de ruban adhésif comprenant :
un film orienté biaxialement, selon l'une quelconque des revendications 1 à 16.

18. Support selon la revendication 17, dans lequel ledit film comprend une première surface principale, et dans lequel ledit support comprend en outre un adhésif sur ladite première surface principale dudit film.

19. Support selon la revendication 18, dans lequel ledit adhésif comprend un adhésif sensible à la pression.

20. Support selon la revendication 19, dans lequel ledit support comprend une largeur et une longueur, dans lequel ladite longueur est significativement plus grande que ladite largeur, dans lequel la direction dite de référence est parallèle à la longueur dudit support, et dans lequel ledit support est enroulé en spirale selon sa longueur de manière à obtenir un rouleau de ruban.

21. Support selon la revendication 16, dans lequel pour un film selon les revendications 1 ou 3 ledit rouleau est monté sur un distributeur comprenant une lame de coupe en métal.

22. Support selon la revendication 16, dans lequel pour un film selon les revendications 1, 7 ou 9 ledit rouleau est monté sur un distributeur comprenant une lame de coupe en plastique.

23. Ruban adhésif, comprenant :
un film support orienté biaxialement selon l'une quelconque des revendications 17 à 22.

24. Assemblage d'un rouleau de ruban adhésif sensible à la pression monté sur un distributeur, l'assemblage comprenant :
a) un rouleau de ruban adhésif sensible à la pression, ledit ruban comprenant un film support orienté biaxialement selon la revendication 20, et
b) un distributeur, ledit distributeur comprenant un support de rouleau sur lequel ledit rouleau de ruban est monté de manière à pouvoir tourner, et une lame de coupe dentelée en plastique pour rompre ledit ruban adhésif.

25. Assemblage selon la revendication 24, dans lequel ladite lame de coupe comprend du polystyrène.
